# EUROPEAN PATENT APPLICATION

(11) **EP 4 817 866 A1**
(43) Date of publication of application: **07.10.2026**
(21) Application number: 24897738.1
(22) Date of filing: 03.04.2024
(51) Int. Cl.: B32B 7/10, B32B 7/027, B32B 5/30, B32B 27/08, B32B 38/00, H01M 10/655, H01M 10/613, H01M 10/625, H01M 50/22, H01M 50/231

(54) **HEAT ABSORBING SHEET, BATTERY CELL, AND BATTERY MODULE**

(30) Priority: 30.11.2023 KR 20230171233
(71) Applicant: SAMSUNG SDI CO., LTD., Yongin-si, Gyeonggi-do 17084 (KR)
(72) Inventor: JUNG, Yeon Ho, Suwon-si Gyeonggi-do 16678 (KR); BAEK, Soo Min, Suwon-si Gyeonggi-do 16678 (KR)
(74) Representative: Marks & Clerk LLP
(86) International application number: PCT/KR2024/004287
(87) International publication number: WO 2025/116136

(57) **Abstract**

The present disclosure relates to a heat-absorbing sheet, and the technical problem to be solved is to provide a heat-absorbing sheet that lowers a temperature through a heat-absorbing reaction. For this, the present disclosure provides a heat-absorbing sheet including a first heat-absorbing material layer in a powder form; a second heat-absorbing material layer in a powder form and capable of reacting with the first heat-absorbing material layer to carry out a heat-absorbing reaction; and a polymer layer located between the first heat-absorbing material layer and the second heat-absorbing material layer and isolating the first heat-absorbing material layer and the second heat-absorbing material layer.

## Description

### [Technical Field]

The present disclosure relates to a heat-absorbing sheet, a battery cell including the heat-absorbing sheet, and a battery module including the battery cell.

### [Background Art]

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders, and high-capacity secondary batteries are widely used as power sources for driving motors of hybrid electric vehicles, electric vehicles, and the like, and as power storage batteries. The secondary battery includes electrodes including a positive electrode and/or a negative electrode, an electrode assembly including the electrodes, a case accommodating the same, and an electrode terminal connected to the electrode assembly.

Meanwhile, when an internal short circuit occurs due to over-charge or over-discharge, the internal temperature of a secondary battery may rise. Alternatively, the internal temperature of a secondary battery may rise due to an increase in the external temperature.

When the internal temperature rises, ignition may occur in the secondary battery as the separator melts due to the heat generation of electrode plates and components.

Secondary batteries are being applied to electronic devices that are closely related to people's daily lives, such as automobiles and smartphones. Accordingly, for people's safety, it is required to reduce the occurrence of secondary battery ignition and improve safety.

The above-described information disclosed in the background art of the present invention is only for improving the understanding of the background of the present invention, and therefore may include information that does not constitute the related art.

### [Disclosure]

### [Technical Problem]

The present invention relates to a heat-absorbing sheet that cools the inside of a cell, a battery cell including the heat-absorbing sheet, and/or a battery module including the battery cell.

However, the technical problems to be solved by the present invention are not limited to the above-described problems, and other problems that are not mentioned may be clearly understood by those skilled in the art from the description of the invention described below.

### [Technical Solution]

A heat-absorbing sheet according to one embodiment of the present invention for solving the above-described technical problem includes a first heat-absorbing material layer in a powder form; a second heat-absorbing material layer in a powder form and capable of reacting with the first heat-absorbing material layer to carry out a heat-absorbing reaction; and a polymer layer located between the first heat-absorbing material layer and the second heat-absorbing material layer and isolating the first heat-absorbing material layer and the second heat-absorbing material layer.

A battery cell according to one embodiment of the present invention for solving the above-described technical problem includes an electrode assembly formed by laminating a positive electrode, a negative electrode, and a separator located between the positive electrode and the negative electrode; a can in which the electrode assembly is embedded together with an electrolyte; and a heat-absorbing sheet adhered to at least a part of the inside of the can, wherein the heat-absorbing sheet includes a first heat-absorbing material layer in a powder form; a second heat-absorbing material layer in a powder form and capable of reacting with the first heat-absorbing material layer to carry out a heat-absorbing reaction; and a polymer layer located between the first heat-absorbing material layer and the second heat-absorbing material layer and isolating the first heat-absorbing material layer and the second heat-absorbing material layer.

A battery module according to one embodiment of the present invention for solving the above-described technical problem includes the above-described battery cell; and a housing in which a plurality of battery cells are accommodated.

### [Advantageous Effects]

According to the present invention, when the temperature inside a cell rises, the inside of the cell can be cooled.

According to the present invention, ignition and a chain reaction due to the temperature rise inside a cell can be prevented.

According to another aspect of the present invention, a battery pack (and/or module) manufactured using a battery cell having an improved structure and a vehicle including the same can be provided.

However, the effects that may be obtained through the present invention are not limited to the above-described effects, and other technical effects that are not mentioned may be clearly understood by those skilled in the art from the description of the invention described below.

### [Description of Drawings]

The following drawings attached to the present specification illustrate preferred embodiments of the present invention and, together with the detailed description of the invention described below, allow further understanding of the technical idea of the present invention, and therefore, the present invention should not be construed as being limited to details described in such drawings.
FIG. 1 shows a diagram illustrating a cylindrical battery according to one embodiment of the present invention.
FIG. 2 shows a cross-sectional view of a cylindrical battery according to one embodiment of the present invention.
FIG. 3 shows an exploded perspective view of a pouch battery according to one embodiment of the present invention.
FIG. 4 shows a diagram illustrating a prismatic battery according to one embodiment of the present invention.
FIG. 5 shows a cross-sectional view of a prismatic battery according to one embodiment of the present invention.
FIG. 6 shows an exploded view of a heat-absorbing sheet according to one embodiment of the present invention.
FIG. 7 shows a perspective view of a heat-absorbing sheet according to one embodiment of the present invention.
FIG. 8 shows a cross-sectional view of a battery cell according to one embodiment of the present invention.
FIG. 9 shows a diagram explaining a heat-absorbing process of a heat-absorbing sheet according to one embodiment of the present invention.
FIG. 10 shows a diagram illustrating a battery module according to one embodiment of the present invention.
FIG. 11 shows a diagram illustrating a battery pack according to one embodiment of the present invention.
FIG. 12 shows a diagram illustrating a battery pack according to one embodiment of the present invention.
FIG. 13 shows a diagram illustrating a vehicle body and vehicle body components according to one embodiment of the present invention.
FIG. 14 shows a diagram illustrating a vehicle body and vehicle body components according to one embodiment of the present invention.

### [Modes of the Invention]

Hereinafter, exemplary embodiments of the present invention will be described in detail with reference to the accompanying drawings. Prior to this, terms or words used in the present specification and claims should not be construed as having conventional or dictionary meanings, and should be interpreted as meanings and concepts corresponding to the technical idea of the present invention based on the principle that the inventors can properly define the concept of terms in order to best explain their own invention. Therefore, the embodiments described in the present specification and the configurations illustrated in the drawings are only the most preferred embodiments of the present invention and do not represent all of the technical principles of the present invention, and it should be understood that there may be equivalents and variations that can replace them at the time of filing the present application.

In addition, "comprise and include" and/or "comprising and including" as used herein specify the presence of mentioned shapes, numbers, steps, operations, members, elements, and/or groups thereof and do not preclude the possibility of the presence or addition of one or more other shapes, numbers, steps, operations, members, elements, and/or groups thereof.

In addition, to help understand the invention, the attached drawings are not illustrated to actual scale and the dimensions of some components may be exaggerated. In addition, the same reference numbers may be given to the same components in different embodiments.

The reference to two compared objects being "identical" means "substantially identical." Therefore, "being substantially identical" may include a deviation that is considered low in the art, for example, a deviation of less than 5%. In addition, uniformity of a parameter over a predetermined region may mean uniformity in terms of averages.

Although terms such as 'first' and 'second' are used to describe various components, these components are not limited by these terms. These terms are only used to distinguish one component from another, and unless otherwise specified, a first component may also be a second component.

Throughout the specification, unless otherwise specifically stated, each component may be singular or plural.

The description that an arbitrary component is disposed "above (below)" or "on (or under)" a component may mean that the arbitrary component may be disposed not only in contact with the upper surface (or lower surface) of the component, but also that other components may be interposed between the component and the arbitrary component disposed above (or below) the component.

In addition, when it is described that a component is "coupled," "joined," or "connected" to another component, it should be understood that the components may be directly coupled or connected to each other, but that other components may also be "interposed" between each component, or that each component may "coupled," "joined," or "connected" through another component. In addition, when it is described that a part is electrically coupled to another part, this includes not only cases where they are directly coupled, but also cases where they are coupled with another element therebetween.

Throughout the specification, when reference is made to "A and/or B," this means A, B, or A and B, unless otherwise specified. In other words, "and/or" includes any or all combinations of the listed items. When reference is made to "C to D," this means C or more and D or less, unless otherwise specified.

The terminology used herein is for the purpose of describing embodiments of the present disclosure and is not intended to limit the present disclosure.

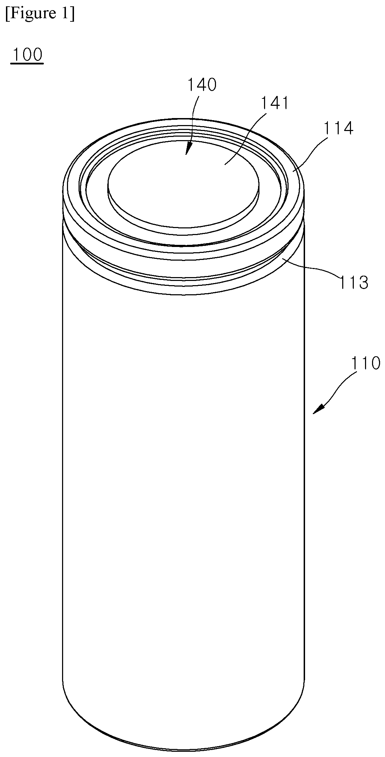

FIG. 1 shows a diagram illustrating a cylindrical battery according to one embodiment of the present invention.

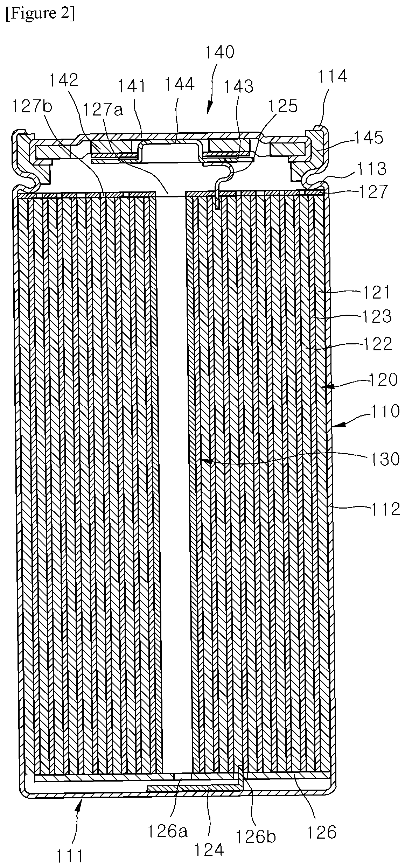

FIG. 2 shows a cross-sectional view of a cylindrical battery according to one embodiment of the present invention.

As shown in FIGS. 1 and 2, a cylindrical lithium ion secondary battery 100 according to various embodiments of the present invention may include a cylindrical can 110, an electrode assembly 120, and a cap assembly 140. In addition, the cylindrical lithium ion secondary battery 100 may further include a center pin 130 in some cases. In addition, in the secondary battery 100 according to an embodiment of the present invention, since the cap assembly 140 also performs a current interrupt operation, it is also referred to as a current interrupt device in some cases.

A cylindrical can 110 may include a bottom part 111 that is approximately circular and a cylindrical side wall 112 extending a certain length upward from the circumference of the bottom part 111. The upper part of the cylindrical can 110 is open during the secondary battery manufacturing process. Therefore, during the secondary battery assembling process, an electrode assembly 120 and a center pin 130 may be inserted into the cylindrical can 110 together with an electrolyte. The cylindrical can 110 may be manufactured from, for example, steel, stainless steel, aluminum, an aluminum alloy, or an equivalent thereof, but is not limited thereto.

In addition, the cylindrical can 110 may include a beading part 113 that is recessed inward at the lower part with the cap assembly 140 at the center so that the cap assembly 140 is not separated to the outside, and a crimping part 114 that is bent inward at the upper part thereof.

The electrode assembly 120 may be accommodated inside the cylindrical can 110. The electrode assembly 120 may include a negative electrode plate 121 in which a negative electrode active material (e.g., graphite, carbon, etc.) is applied on a negative electrode current collector plate, a positive electrode plate 122 in which a positive electrode active material (e.g., a transition metal oxide (LiCoO₂, LiNiO₂, LiMn₂O₄, etc.)) is applied on a positive electrode current collector plate, and a separator 123 located between the negative electrode plate 121 and the positive electrode plate 122 to prevent a short circuit and only allow the movement of lithium ions. In addition, the negative electrode plate 121, the positive electrode plate 122, and the separator 123 may be wound in an approximately cylindrical shape. Here, for example, the negative electrode current collector plate may be made of copper (Cu) foil, the positive electrode current collector plate may be made of aluminum (Al) foil, and the separator may be made of polyethylene (PE) or polypropylene (PP), but the present invention are not limited thereto.

In addition, a negative electrode tab 124 protruding downward and extending a certain length may be welded to the negative electrode plate 121, and a positive electrode tab 125 protruding upward and extending a certain length may be welded to the positive electrode plate 122, but the opposite is also possible. In addition, for example, the negative electrode tab 124 may be formed of copper (Cu) or nickel (Ni), and the positive electrode tab 125 may be formed of aluminum (Al), but the present invention is not limited thereto.

In addition, the negative electrode tab 124 of the electrode assembly 120 may be welded to the bottom part 111 of the cylindrical can 110. Therefore, the cylindrical can 110 may operate as a negative electrode. Of course, conversely, the positive electrode tab 125 may be welded to the bottom part 111 of the cylindrical can 110, and in this case, the cylindrical can 110 may operate as a positive electrode.

In addition, a first insulating plate 126 coupled to the cylindrical can 110 and having a first hole 126a formed at the center and a second hole 126b formed on the outer side thereof may be interposed between the electrode assembly 120 and the bottom part 111. This first insulating plate 126 serves to prevent the electrode assembly 120 from making electrical contact with the bottom part 111 of the cylindrical can 110. In particular, the first insulating plate 126 serves to prevent the positive electrode plate 122 of the electrode assembly 120 from making electrical contact with the bottom part 111. Here, when a large amount of gas is generated due to an abnormality in a secondary battery, the first hole 126a serves to allow the gas to quickly move upward through the center pin 130, and the second hole 126b serves to allow the negative electrode tab 124 to pass therethrough and be welded to the bottom part 111.

In addition, a second insulating plate 127 coupled to a cylindrical can 110 and having a first hole 127a formed at the center and a plurality of second holes 127b formed on the outer side thereof may be interposed between the electrode assembly 120 and the cap assembly 140. This second insulating plate 127 serves to prevent the electrode assembly 120 from making electrical contact with the cap assembly 140. In particular, the second insulating plate 127 serves to prevent the negative electrode plate 121 of the electrode assembly 120 from making electrical contact with the cap assembly 140. Here, when a large amount of gas is generated due to an abnormality in a secondary battery, the first hole 127a serves to allow the gas to quickly move to the cap assembly 140, and the second hole 127b serves to allow the positive electrode tab 125 to pass therethrough and be welded to the cap assembly 140. In addition, the remaining second hole 127b serves to allow an electrolyte to quickly flow into the electrode assembly 120 during an electrolyte injection process.

In addition, the diameter of the first holes 126a and 127a of the first and second insulating plates 126 and 127 is formed to be smaller than the diameter of the center pin 130, thereby preventing the center pin 130 from making electrical contact with the bottom part 111 of the cylindrical can 110 or the cap assembly 140 due to external impacts.

The center pin 130 has a hollow circular pipe shape and may be joined to the approximate center of an electrode assembly 120. The center pin 130 may be made of, for example, steel, stainless steel, aluminum, an aluminum alloy, or polybutylene terephthalate, but is not limited thereto. The center pin 130 suppresses the deformation of the electrode assembly 120 during the charging and discharging of the battery and serves as a passage for gas generated inside the secondary battery. Of course, the center pin 130 may be omitted in some cases.

The cap assembly 140 may include a top plate 141, a middle plate 142, an insulating plate 143, and a bottom plate 144.

The middle plate 142 may be located under the top plate 141 and may have a substantially flat shape.

The insulating plate 143 may be formed in a circular ring shape having a certain width when viewed from below. In addition, the insulating plate 143 serves to insulate the middle plate 142 and the bottom plate 144 from each other. The insulating plate 143 may be, for example, interposed between the middle plate 142 and the bottom plate 144 and ultrasonically welded, but is not limited thereto.

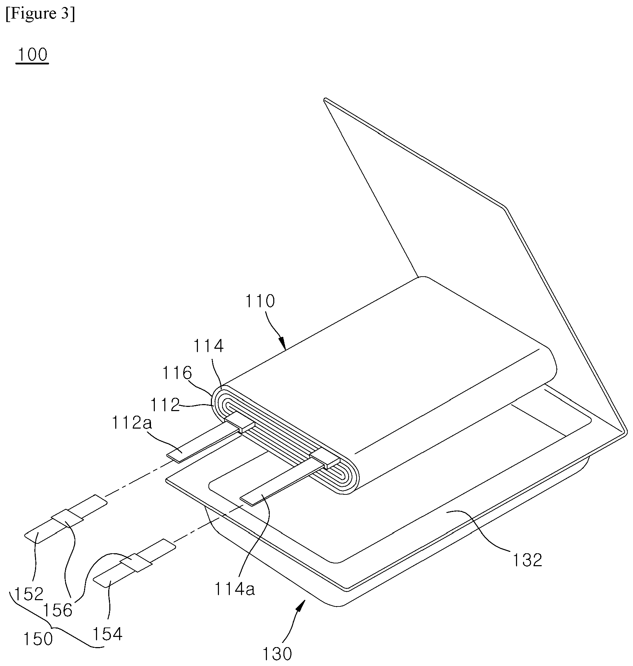

FIG. 3 shows an exploded perspective view of a pouch battery according to one embodiment of the present invention.

As illustrated in FIG. 3, a typical secondary battery 100 consists of an electrode assembly 110 and a pouch 130 accommodating the electrode assembly 110.

The electrode assembly 110 includes a negative electrode plate 112, which is a first electrode plate, a positive electrode plate 114, which is a second electrode plate, and a separator 116 interposed therebetween. The negative electrode plate 112 is provided with a negative electrode tab 112a electrically connected to a negative electrode non-coated portion, and the positive electrode plate 114 is provided with a positive electrode tab 114a electrically connected to a positive electrode non-coated portion. The negative electrode tab 112a and the positive electrode tab 114a are welded to a negative electrode lead 152 and a positive electrode lead 154 of an external terminal, and thus are electrically connected to the outside. A tab film 156 for insulation from the pouch 130 is attached to the negative electrode lead 152 and the positive electrode lead 154.

The pouch 130 is sealed as sealing parts 132 at the edges come into contact with each other while the electrode assembly 110 is accommodated. At this time, the sealing is performed while the tab film 156 is disposed between the sealing parts 132. As shown in FIG. 2, the form in which the tab film 156 is attached to each of the negative electrode tab 112a and the positive electrode tab 114a is defined as a 'separate tab film' (this sealing structure is defined as a separate sealing structure).

The sealing part 132 of the pouch 130 is made of a heat fusible material, and is a structure in which sealing is performed by bonding heat fusible layers to each other. Since a heat fusible material generally has weak adhesiveness to metal, the tab film 156 in the form of a thin film is attached to the tab and fused with the pouch 130. However, a separate sealing structure has problems in that the workability and productivity are low because the tab film 156 must be individually attached to each tab, welded to the tab, and then thermally fused again with the pouch 130.

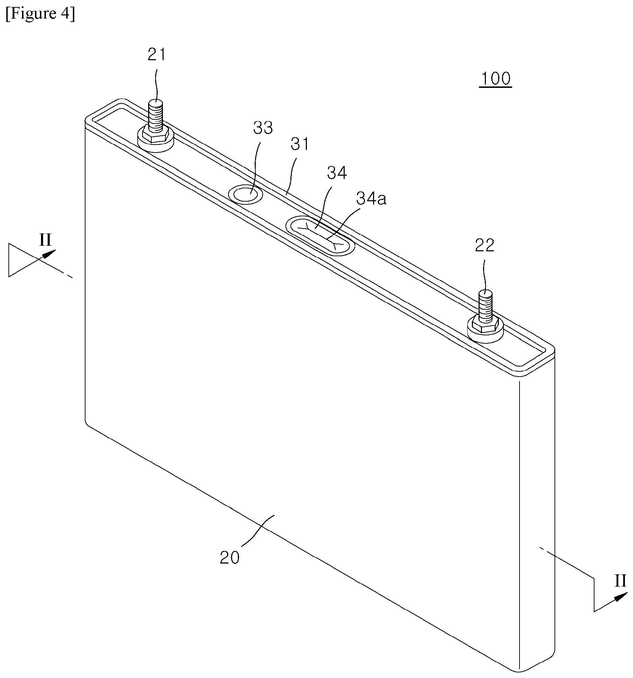

FIG. 4 shows a diagram illustrating a prismatic battery according to one embodiment of the present invention.

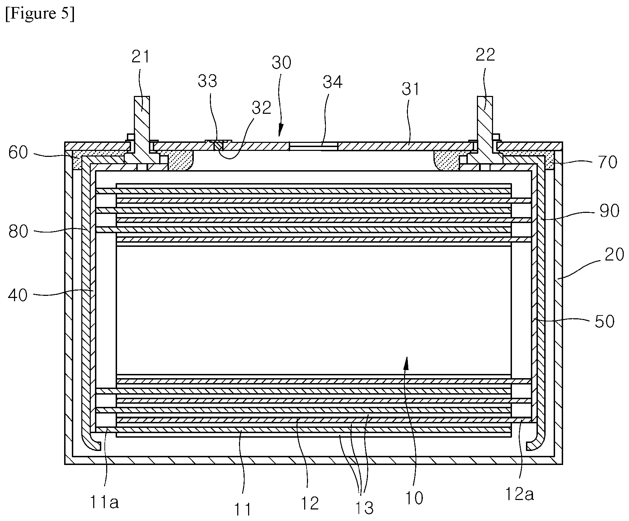

FIG. 5 shows a cross-sectional view of a prismatic battery according to one embodiment of the present invention.

Referring to FIGS. 4 and 5, a secondary battery 100 according to the present embodiment may include at least one electrode assembly 10 formed by interposing a separator 13 as an insulator between a positive electrode 11 and a negative electrode 12 and winding the same, a case 20 in which the electrode assembly 10 is embedded, and a cap assembly 30 coupled to an opening of the case 20.

The secondary battery 100 according to the present embodiment is described as a prismatic lithium ion secondary battery as an example. However, the present invention is not limited thereto, and the present invention may be applied to various types of batteries such as a lithium polymer battery or a cylindrical battery.

The positive electrode 11 and the negative electrode 12 may include a coated portion, which is an area where an active material is applied on a current collector formed of a thin metal foil, and a non-coated portion 11a and 12a, which is an area where an active material is not applied.

The positive electrode 11 and the negative electrode 12 are wound after the separator 13, which is an insulator, is interposed therebetween. However, the present invention is not limited thereto, and the above-described electrode assembly 10 may be formed with a structure in which a positive electrode and a negative electrode, which are made up of a plurality of sheets, are alternately laminated with a separator interposed therebetween.

The case 20 forms the overall appearance of the secondary battery 100 and may be formed of a conductive metal such as aluminum, an aluminum alloy, or nickel-plated steel. In addition, the case 20 may provide a space in which the electrode assembly 10 is accommodated.

The cap assembly 30 may include a cap plate 31 covering an opening of a case 20, and the case 20 and the cap plate 31 may be made of a conductive material. Here, positive and negative electrode terminals 21 and 22 electrically connected to the positive electrode 11 or the negative electrode 12 may be installed to protrude outward by passing through the cap plate 31.

In addition, the outer surface of the upper pillar of the positive and negative electrode terminals 21 and 22 protruding out of the cap plate 31 may be threaded and may be fixed to the cap plate 31 with a nut.

However, the present invention is not limited thereto, and the positive and negative electrode terminals 21 and 22 may be formed with a rivet structure and may be riveted or welded to the cap plate 31.

In addition, the cap plate 31 may be formed of a thin plate and may be joined to the opening of the case 20, and an electrolyte inlet 32 in which a sealing plug 33 may be installed may be formed in the cap plate 31, and a vent part 34 in which a notch 34a is formed may be installed.

The positive electrode and negative electrode terminals 21 and 22 may be electrically connected to current collectors including first and second current collectors 40 and 50 (hereinafter referred to as positive electrode and negative electrode current collectors) welded to a positive electrode non-coated portion 11a or a negative electrode non-coated portion 12a.

For example, the positive and negative electrode terminals 21 and 22 may be welded to the positive electrode and negative electrode current collectors 40 and 50. However, the present invention is not limited thereto, and the positive and negative electrode terminals 21 and 22 and the positive electrode and negative electrode current collectors 40 and 50 may be formed by being integrally joined.

In addition, an insulating member may be installed between the electrode assembly 10 and the cap plate 31. Here, the insulating member may include first and second lower insulating members 60 and 70, and each of the first and second lower insulating members 60 and 70 may be installed between the electrode assembly 10 and the cap plate 31.

In addition, according to the present embodiment, one end of a separating member that may be installed to face one side surface of the electrode assembly 10 may be installed between the insulating member and the positive and negative electrode terminals 21 and 22.

Here, the separating member may include first and second separating members 80 and 90.

Therefore, one end of the first and second separating members 80 and 90 that may be installed to face one side surface of the electrode assembly 10 may be installed between the first and second lower insulating members 60 and 70 and the positive and negative electrode terminals 21 and 22.

Therefore, the positive and negative electrode terminals 21 and 22 welded to the positive electrode and negative electrode current collectors 40 and 50 may be joined to one end of the first and second lower insulating members 60 and 70 and the first and second separating members 80 and 90.

However, the present invention is not limited thereto, and the case may be configured in various shapes such as a circular shape, a pouch shape, etc. In addition, the case may be made of a metal such as aluminum, an aluminum alloy, nickel-plated steel, or a laminated film or plastic that constitutes a pouch.

A battery cell 100 according to one embodiment of the present invention has been described with reference to FIGS. 1 to 5. Hereinafter, a heat-absorbing sheet, which is a structure applicable to the battery cell 100 and capable of cooling the interior of the battery cell 100 when the temperature inside and/or outside the battery cell 100 rises, will be described.

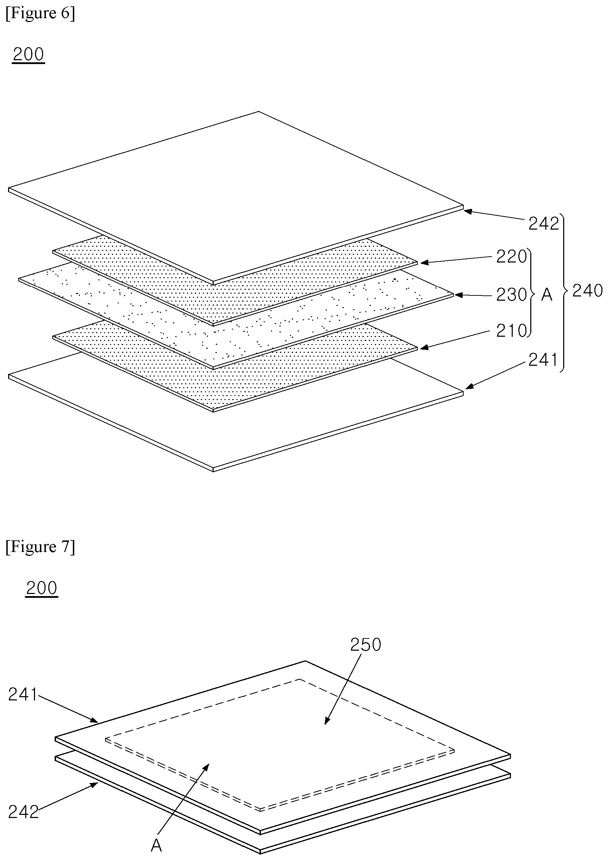

FIG. 6 shows an exploded view of a heat-absorbing sheet according to one embodiment of the present invention.

In FIG. 6, the reference numeral '200' represents a heat-absorbing sheet according to one embodiment of the present invention. The heat-absorbing sheet 200 causes a heat-absorbing reaction under specific conditions. At this time, the specific conditions are, for example, a temperature environment within a predetermined range. Through this, the heat-absorbing sheet 200 may lower the ambient temperature while absorbing the ambient heat.

The heat-absorbing sheet 200 includes a first heat-absorbing material layer 210, a second heat-absorbing material layer 220, and a polymer layer 230.

The first heat-absorbing material layer 210 and the second heat-absorbing material layer 220 are in a powder form. When a coolant included in a battery cell 100 includes a liquid such as a solvent, the liquid may flow out from the coolant and reduce the safety of the battery cell 100. To prevent this risk, the first heat-absorbing material layer 210 and the second heat-absorbing material layer 220 are in a solid state, for example, in a powder form.

In general, since the battery cell 100 is applied to people's daily lives, it operates at 0 to 40 °C, which is the average temperature of people's living environment. In addition, assuming that the battery is used in an extreme environment, the battery cell 100 operates at a temperature of -20 to 75 °C in a wide range. In addition, the battery cells 100 are manufactured through various inspection steps (e.g., a formation process) to inspect whether charging and discharging are performed well. Accordingly, the internal temperature of a battery cell 100 may rise to, for example, about 90 °C.

The first and second heat-absorbing material layers 210 and 220 are materials having a melting point higher than the operating temperature range of the battery cell 100. Furthermore, the first and second heat-absorbing material layers 210 and 220 are materials having a melting point higher than the range of the temperature that rises during the inspection step of the battery cell 100.

For example, in an inspection step for the battery cell 100, when the temperature of the battery cell 100 rises to 90 °C, the first and second heat-absorbing material layers 210 and 220 may be materials having a melting point of 90 °C or higher. However, the first and second heat-absorbing material layers 210 and 220 included in the heat-absorbing sheet 200 are materials having a melting point higher than the operating temperature range of the battery cell 100 to which they are applied. Accordingly, the heat-absorbing sheet 200 according to one embodiment of the present invention can prevent a risk that may occur due to the heat-absorbing material being in a liquid state such as a solvent.

In addition, as described above, the heat-absorbing sheet 200 utilizes a heat-absorbing reaction between the first heat-absorbing material layer 210 and the second heat-absorbing material layer 220. Accordingly, the second heat-absorbing material layer 220 is a material capable of carrying out a heat-absorbing reaction with the first heat-absorbing material layer 210.

Therefore, the first heat-absorbing material layer 210 and the second heat-absorbing material layer 220 are materials each having a melting point of, for example, 90 °C or higher and causing a heat-absorbing reaction with each other. For example, the first heat-absorbing material layer 210 is any one or more selected from the group consisting of ammonium chloride (NH₄Cl) or ammonium nitrate (NH₄NO₃) that satisfies these conditions. Meanwhile, the second heat-absorbing material layer 220 includes barium hydroxide (Ba(OH)₂).

When the first heat-absorbing material layer 210 is ammonium chloride (NH₄Cl), for the efficiency of the reaction, the heat-absorbing sheet 200 may include, for example, the first heat-absorbing material layer 210 and the second heat-absorbing material layer 220 at a molar ratio of 2:0.8 to 1.2. When the first heat-absorbing material layer 210 is ammonium nitrate (NH₄NO₃), for the efficiency of the reaction, the heat-absorbing sheet 200 may include, for example, the first heat-absorbing material layer 210 and the second heat-absorbing material layer 220 at a molar ratio of 2:0.8 to 1.2. However, this molar ratio is for the efficiency and is only an example. When one embodiment according to the present invention is implemented regardless of the efficiency, the first and second heat-absorbing material layers 210 and 220 may be included at a ratio different from the above-described ratio.

Hereinafter, for convenience of explanation, a case in which the first heat-absorbing material layer 210 is ammonium nitrate (NH₄NO₃) will be described as an example.

As described above, the heat-absorbing sheet 200 causes a heat-absorbing reaction through the heat-absorbing materials 210 and 220. However, it is necessary to prevent such a heat-absorbing reaction from occurring when the battery cell 100 is charged and discharged or applied to daily life. This is because there is no need to cool a battery cell 100 that is operating normally.

Accordingly, the heat-absorbing sheet 200 further includes a polymer layer 230 located between the first heat-absorbing material layer 210 and the second heat-absorbing material layer 220. The polymer layer 230 allows the first heat-absorbing material layer 210 and the second heat-absorbing material layer 220 to be present within a heat-absorbing sheet 200 while being isolated from each other. In addition, the polymer layer 230 melts when the internal temperature of the battery cell 100 rises, thereby allowing the first heat-absorbing material layer 210 and the second heat-absorbing material layer 220 to come into contact. Through this, the polymer layer 230 causes a heat-absorbing reaction to occur between the first heat-absorbing material layer 210 and the second heat-absorbing material layer 220 when the internal temperature of the battery cell 100 rises. To this end, the polymer layer 230 may have the following characteristics.

In order to physically isolate the first heat-absorbing material layer 210 and the second heat-absorbing material layer 220 in a normal operating state of the battery cell 100, the polymer layer 230 needs to be in a solid state in the operating temperature range of the battery cell 100. Therefore, for example, the polymer layer 230 is a material having a melting point of 90 °C or higher.

Meanwhile, when the temperature of the battery cell 100 exceeds a certain range, the battery cell 100 already enters a damage stage. Therefore, the polymer layer 230 needs to induce a heat-absorbing reaction between the first heat-absorbing material layer 210 and the second heat-absorbing material layer 220 before the battery cell 100 is damaged. To this end, the polymer layer 230 is a material having a melting point so that may melt at a temperature before the battery cell 100 is damaged.

In the case of a commonly used battery cell 100, damage begins at a range of about 120 °C or higher. In this case, for example, the melting point of the polymer layer 230 is 120 °C or lower. Therefore, in the case of a heat-absorbing sheet 200 applied to a commonly used battery cell 100, the melting point of the polymer layer 230 is, for example, 90 to 120 °C. Accordingly, the polymer layer 230 is, for example, any one or more selected from the group consisting of low-density polyethylene (LDPE), linear low-density polyethylene (LLDPE), and acrylonitrile butadiene styrene (ABS) resin.

Alternatively, when the normal operating temperature range of the battery cell 100 becomes higher, the melting point of the polymer layer 230 may also become higher. In this case, the polymer layer 230 may be, for example, at least one of polymethyl methacrylate (PMMA), polyacetal, polyphenylene ether (PPE), polystyrene, and polyvinyl chloride (PVC).

Hereinafter, the polymer layer 230 is described using LDPE as an example.

Meanwhile, for convenience of explanation, among the components included in the heat-absorbing sheet 200, the first heat-absorbing material layer 210, the second heat-absorbing material layer 220, and the polymer layer 230 may be collectively referred to as a heat-absorbing layer A.

Meanwhile, in order for the heat-absorbing layer A to be efficiently positioned within the battery cell 100 (for example, to prevent powder-type heat-absorbing materials from being positioned in a scattered manner), the heat-absorbing sheet 200 may further include a component that supports and/or stores the heat-absorbing layer A. For example, the heat-absorbing sheet 200 may further include a case 240 that performs this role.

The case 240 is formed in a shape that surrounds the heat-absorbing layer A. Accordingly, the heat-absorbing layer A may be sealed while being inserted into the case 240.

The case 240 is intended to store and/or support the heat-absorbing layer A, and for example, it is necessary that no separate reaction occurs while a chemical reaction (e.g., a heat-absorbing reaction) occurs within the heat-absorbing layer A. This is because when the case 240 reacts with the heat-absorbing layer A, it may rather damage the battery cell 100. Meanwhile, as described above, the heat-absorbing layer A undergoes a chemical reaction as the polymer layer 230 melts. Therefore, the case 240 includes a material having a melting point higher than that of the polymer layer 230.

For example, as illustrated in FIG. 6, the case 240 may be laminated together with the heat-absorbing layer A to surround the heat-absorbing layer A. In this case, the case 240 may include a first case 241 laminated on one surface of the heat-absorbing layer A and a second case 242 laminated on the other surface of the heat-absorbing layer A. In other words, the first case 241 may be formed on one surface of a polymer layer 230 while covering the first heat-absorbing material layer 210 side, and the second case 242 may be formed on the other surface of the polymer layer 230 while covering the second heat-absorbing material layer 220 side.

The case 240 is laminated on the heat-absorbing layer A and then bonded to the heat-absorbing layer A by thermal fusion so as to be fixed. For example, the first case 241 and the second case 242 are laminated and bonded to both surfaces of the polymer layer 230 by thermal fusion. Therefore, the case 240 includes, for example, a thermally fusible material.

In summary, the case 240 includes a material that has a melting point higher than that of the polymer layer 230 and that may be thermally fused, for example, polyimide (PI).

Through the above-described components, the heat-absorbing sheet 200 according to one embodiment of the present invention may serve as a coolant. For example, when the heat-absorbing sheet 200 is mounted on at least a part of the inside of the battery cell 100, the heat-absorbing sheet 200 may lower the internal temperature of the battery cell 100 when the internal temperature rises. Meanwhile, as an example, the target to which the heat-absorbing sheet 200 is applied is described as a battery cell 100, but the heat-absorbing sheet 200 may be applied to all targets that require temperature reduction when reaching a specific temperature range.

Through the above-described method, the heat-absorbing sheet 200 according to one embodiment of the present invention may prevent chain reactions, fires, and the like caused by a temperature increase inside the battery cell 100.

FIG. 7 shows a perspective view of a heat-absorbing sheet according to one embodiment of the present invention.

As described in FIG. 6, the heat-absorbing sheet 200 according to one embodiment of the present invention includes a heat-absorbing layer A and a case 240 that surrounds the heat-absorbing layer A.

For example, the heat-absorbing sheet 200 may be formed through a step of providing a first heat-absorbing material layer 210 on a first case 241; a step of disposing a polymer layer 230 on the first heat-absorbing material layer 210 while covering the first heat-absorbing material layer 210; a step of providing a second heat-absorbing material layer 220 on the polymer layer 230; a step of disposing a second case 242 on the second heat-absorbing material layer 220 while covering the second heat-absorbing material layer 220; and a step of thermally fusing together the edges of the first case 241, the polymer layer 230, and the second heat-absorbing material layer 220.

Alternatively, for example, the heat-absorbing sheet 200 may be formed through a step of providing a first heat-absorbing material layer 210 on a first case 241; a step of disposing a polymer layer 230 on the first heat-absorbing material layer 210 while covering the first heat-absorbing material layer 210; a step of joining the first case 241 and the polymer layer 230 through thermal fusion; a step of providing a second heat-absorbing material layer 220 on the polymer layer 230; a step of disposing a second case 242 on the second heat-absorbing material layer 220 while covering the second heat-absorbing material layer 220; and a step of joining the polymer layer 230 and the second heat-absorbing material layer 220 through thermal fusion.

At this time, the arrangement order between the first heat-absorbing material layer 210 and the second heat-absorbing material layer 220 may be changed. At this time, thermal fusion may be performed on the entire first case 241, the polymer layer 230, and the second case 242, or may be performed only on the edges of the first case 241, the polymer layer 230, and the second case 242.

In this case, the heat-absorbing sheet 200 has a sheet shape in which the first case 241, the heat-absorbing layer A, and the second case 242 are laminated. Accordingly, the heat-absorbing sheet 200 can be easily and conveniently attached and used anywhere where temperature cooling is required.

To this end, the heat-absorbing sheet 200 may include an adhesive layer 250 on at least one surface. Specifically, the adhesive layer 250 is formed on at least one surface of at least one of the first case 241 and the second case 242.

The adhesive layer 250 has adhesive properties and includes, for example, an adhesive tape, a polymer adhesive in a particle or solution form, and the like. The polymer adhesive includes, for example, polyvinylidene fluoride (PVdF), a polyvinylidene fluoride-hexafluoropropylene (PVdF-HFP) copolymer, or a combination thereof.

Through the above-described method, the heat-absorbing sheet 200 according to one embodiment of the present invention can be easily fixed and applied anywhere. Hereinafter, an example in which the heat-absorbing sheet 200 is applied to a battery cell 100 will be described.

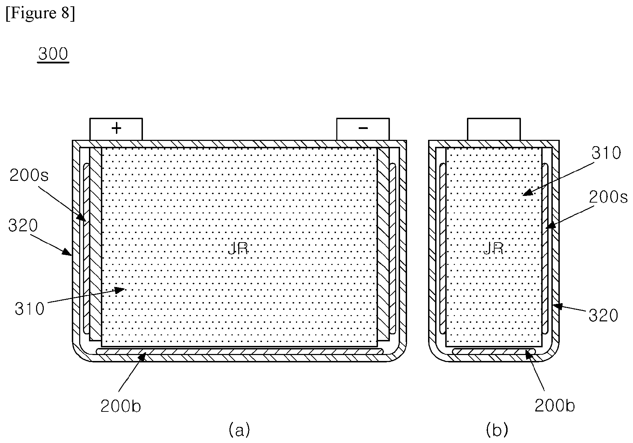

FIG. 8 shows a cross-sectional view of a battery cell according to one embodiment of the present invention.

FIG. 8A is a cross-sectional view of a battery cell 300 (e.g., including the battery cell 100 described in FIGS. 1 to 7) in the long-side direction according to one embodiment of the present invention. FIG. 8B is a cross-sectional view of a battery cell 300 in the short-side direction according to one embodiment of the present invention.

The battery cell 300 includes an electrode assembly 310 (e.g., including the electrode assembly 120 described in FIGS. 1 and 2, the electrode assembly 110 described in FIG. 3, and the electrode assembly 10 described in FIGS. 4 and 5), a can 320 (e.g., including the cylindrical can 110 described in FIGS. 1 and 2, the pouch 130 described in FIG. 3, and the case 20 described in FIGS. 4 and 5), and a heat-absorbing sheet 200.

The electrode assembly 310 is formed by laminating a positive electrode, a negative electrode, and a separator located between the positive electrode and the negative electrode. The can 320 is a space in which the electrode assembly 320 is embedded together with an electrolyte. The heat-absorbing sheet 200 is adhered to at least a part of the inside of the can 320.

As shown in FIG. 8A and 8B, for example, the heat-absorbing sheet 200 is adhered to at least one of a lower surface 200b and a side surface 200s in the short-side or long-side direction inside the can 320. In addition, although not illustrated in FIG. 8, the heat-absorbing sheet 200 may be adhered to an upper surface inside of the can 320.

In this way, the heat-absorbing sheet 200 may be adhered to at least one surface inside the can 320, thereby contributing to cooling when the temperature of the battery cell 300 rises.

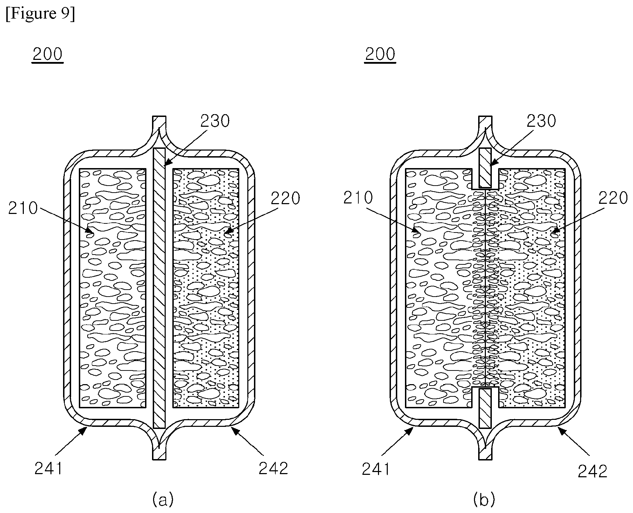

FIG. 9 shows a diagram explaining a heat-absorbing process of a heat-absorbing sheet according to one embodiment of the present invention.

FIG. 9 describes the chemical reaction that occurs in the heat-absorbing sheet 200 described through FIGS. 6 to 8. FIG. 9 describes the application of the heat-absorbing sheet 200 to the battery cell 300 as an example.

FIG. 9A shows a cross-sectional view of the heat-absorbing sheet 200 when the temperature inside the battery cell is within the normal operating range. Since the ambient temperature is below the melting point of the polymer layer 230, the heat-absorbing sheet 200 includes the first heat-absorbing material layer 210 and the second heat-absorbing material layer 220, which are isolated from each other and are in a powder state.

FIG. 9B shows a cross-sectional view of the heat-absorbing sheet 200 when the temperature inside the battery cell rises beyond the normal operating range. Since the ambient temperature is above the melting point of the polymer layer 230, the polymer layer 230 melts as illustrated in FIG. 9B. Accordingly, a chemical reaction occurs when the first heat-absorbing material layer 210 and the second heat-absorbing material layer 220 come into contact with each other. For example, when the first heat-absorbing material layer 210 is ammonium nitrate (NH₄NO₃) and the second heat-absorbing material layer 220 is barium hydroxide (Ba(OH)₂), a reaction as shown in Reaction Scheme 1 below occurs between the first heat-absorbing material layer 210 and the second heat-absorbing material layer 220.

[Reaction Scheme 1] Ba(OH)₂•8H₂O + 2NH₄NO₃ → Ba(NO₃)+10H₂O+2NH₃

The first heat-absorbing material layer 210 and the second heat-absorbing material layer 220 carry out a heat-absorbing reaction according to Reaction Scheme 1, thereby absorbing the heat inside the battery cell 100 and lowering the temperature inside the battery cell 100. At this time, the case 241 and 242 does not react with the first heat-absorbing material layer 210 and the second heat-absorbing material layer 220.

In this way, the heat-absorbing sheet 200 according to one embodiment of the present invention and the battery cell 300 equipped with the heat-absorbing sheet 200 provide a cooling method against temperature increases.

### [Materials]

Meanwhile, the battery cell 100 or 300 according to one embodiment of the present invention described through FIGS. 1 to 9 includes, as described above, 1) an electrode assembly 310 and 2) a can 320 in which the electrode assembly 310 and an electrolyte are embedded. At this time, the electrode assembly is formed by laminating a positive electrode, a negative electrode, and a separator located between the positive electrode and the negative electrode. At this time, each component included in the battery cell 300 is described below.

As a positive electrode active material, a compound capable of reversible intercalation and deintercalation of lithium (lithiated intercalation compound) may be used. Specifically, at least one of composite oxides of lithium and a metal selected from cobalt, manganese, nickel, and a combination thereof may be used.

The composite oxide may be a lithium transition metal composite oxide, and specific examples thereof include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material may be 90% to 99.5% by weight based on 100% by weight of the positive electrode active material layer, and the content of the binder and the conductive material may each be 0.5% to 5% by weight based on 100% by weight of the positive electrode active material layer.

The current collector may be Al, but is not limited thereto.

The negative electrode active material includes a material capable of reversible intercalation and deintercalation of lithium ions, lithium metal, an alloy of lithium and a metal, a material capable of doping and dedoping lithium, or a transition metal oxide.

The material capable of reversible intercalation and deintercalation of lithium ions may include a carbon-based negative electrode active material, for example, crystalline carbon, amorphous carbon, or a combination thereof. Examples of the crystalline carbon include graphite such as natural graphite or artificial graphite, and examples of the amorphous carbon include soft carbon or hard carbon, mesophase pitch carbide, and calcined coke.

As the material capable of doping and dedoping lithium, a Si-based negative electrode active material or a Sn-based negative electrode active material may be used. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of silicon particles whose surface is coated with amorphous carbon.

The silicon-carbon composite may further include crystalline carbon. For example, the silicon-carbon composite may include a core including crystalline carbon and silicon particles and an amorphous carbon coating layer located on the surface of the core.

A negative electrode for a lithium secondary battery includes a current collector and a negative electrode active material layer located on the current collector. The negative electrode active material layer includes a negative electrode active material and may further include a binder and/or a conductive material.

For example, the negative electrode active material layer may include 90% by weight to 99% by weight of the negative electrode active material, 0.5% by weight to 5% by weight of the binder, and 0% by weight to 5% by weight of the conductive material.

As the binder, a non-aqueous binder, an aqueous binder, a dry binder, or a combination thereof may be used. When an aqueous binder is used as the negative electrode binder, the binder may further include a cellulose-based compound capable of imparting viscosity.

As the negative electrode current collector, one selected from copper foil, nickel foil, stainless steel foil, titanium foil, nickel foam, copper foam, a polymer substrate coated with a conductive metal, and a combination thereof may be used.

An electrolyte for a lithium secondary battery includes a non-aqueous organic solvent and a lithium salt.

The non-aqueous organic solvent serves as a medium through which ions involved in the electrochemical reaction of a battery may move.

The non-aqueous organic solvent may be a carbonate-based, ester-based, ether-based, ketone-based, or alcohol-based solvent, an aprotic solvent, or a combination thereof, which may be used alone or in combination of two or more thereof.

In addition, when a carbonate-based solvent is used, a cyclic carbonate and a linear carbonate may be mixed and used.

Depending on the type of lithium secondary battery, a separator may be present between the positive electrode and the negative electrode. As such a separator, polyethylene, polypropylene, PVdF, or a multilayer film of two or more layers thereof may be used.

The separator may include a porous substrate and a coating layer including an organic material, an inorganic material, or a combination thereof located on one or both surfaces of the porous substrate.

The organic material may include a PVdF-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and inorganic material may be present as a mixture in one coating layer, or may be present in a laminated form of a coating layer including an organic material and a coating layer including an inorganic material.

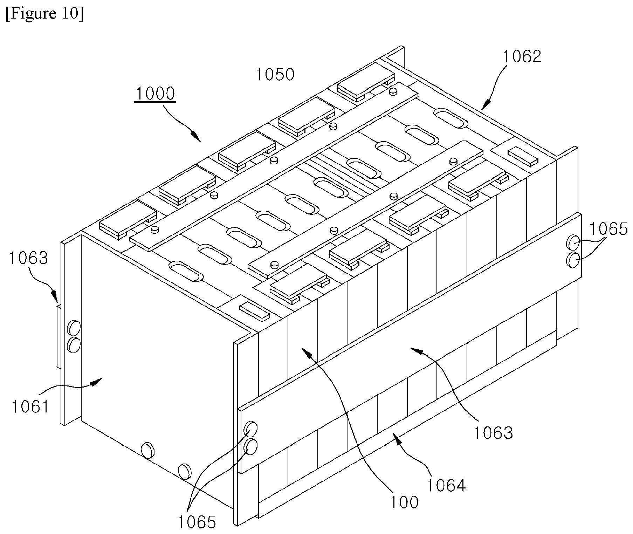

FIG. 10 shows a diagram illustrating a battery module according to one embodiment of the present invention.

Referring to FIG. 10, a battery module 1000 according to the present invention includes a plurality of battery cells 100 (e.g., including the battery cells 100 described through FIGS. 1 to 7 and/or the battery cells 300 described through FIGS. 8 and 9) arranged in one direction and a housing 1061, 1062, 1063, and 1064 in which the plurality of battery cells 100 are accommodated therein.

The housing 1061 to 1064 may include a pair of end plates 1061 and 1062 facing a wide surface of the battery cell 100 and a side plate 1063 and a bottom plate 1064 connecting the pair of end plates 1061 and 1062. The side plate 1063 may support a side surface of the battery cell 100, and the bottom plate 1064 may support a bottom surface of the battery cell 100. In addition, the pair of end plates 1061 and 1062, the side plate 1063, and the bottom plate 1064 may be connected by a member such as a bolt 1065.

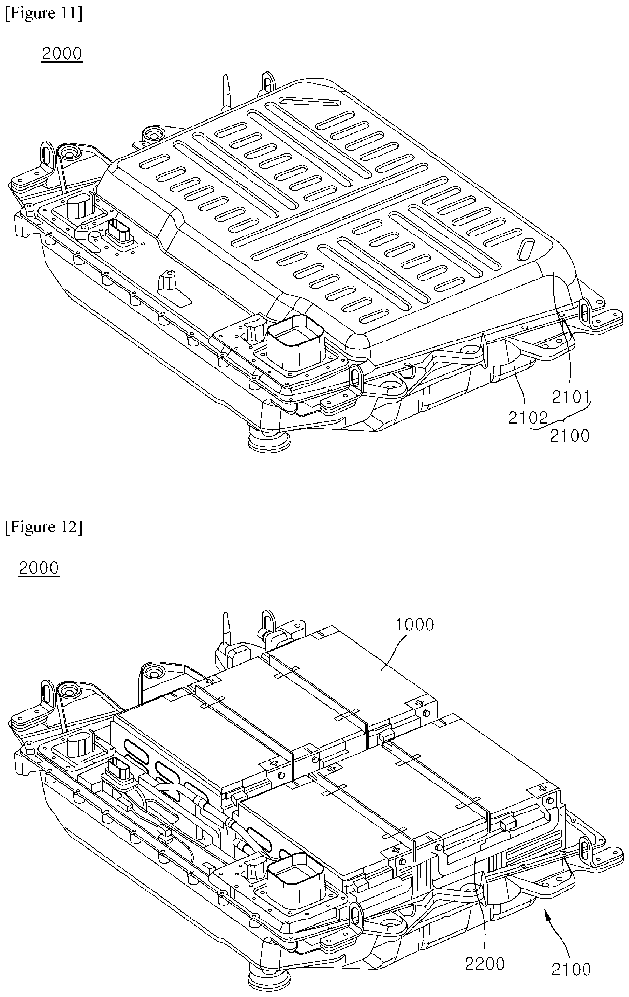

FIG. 11 shows a diagram illustrating a battery pack according to one embodiment of the present invention.

FIG. 12 shows a diagram illustrating a battery pack according to one embodiment of the present invention.

A battery pack 2000 according to an embodiment of the present invention includes an assembly of electrically connected individual batteries and a pack case accommodating the same. In the drawings, for convenience of illustration, components such as a bus bar for electrical connection of batteries, a cooling unit, and an external terminal are omitted.

Specifically, the battery pack 2000 may include a plurality of battery modules 1000 (for example, including the battery module 1000 described in FIG. 10) and a pack case 2100 for accommodating the battery modules 1000. For example, the pack case 2100 may include first and second pack cases 2101 and 2102 that are coupled in a direction facing each other with the plurality of battery modules 1000 interposed therebetween. The plurality of battery modules 1000 may be electrically connected to each other using a bus bar 2200, and the plurality of battery modules 1000 may be electrically connected to each other in a series/parallel or series-parallel hybrid manner to obtain a required electrical output.

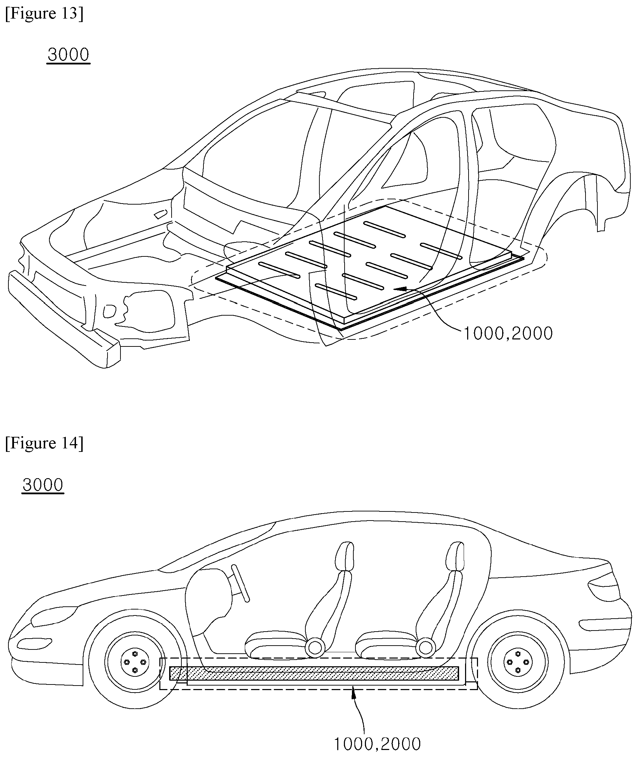

FIG. 13 shows a diagram illustrating a vehicle body and vehicle body components according to one embodiment of the present invention.

FIG. 14 shows a diagram illustrating a vehicle body and vehicle body components according to one embodiment of the present invention.

The battery pack 2000 according to one embodiment of the present invention described in FIGS. 11 and 12 may be mounted in a vehicle 3000. The vehicle 3000 may be, for example, an electric vehicle, a hybrid vehicle, or a plug-in hybrid vehicle. The vehicle includes a four-wheeled vehicle or a two-wheeled vehicle.

As illustrated in FIGS. 13 and 14, the vehicle 3000 according to one embodiment of the present invention includes a battery module 1000 according to one embodiment of the present invention and/or a battery pack 2000 including the battery module 1000. The vehicle 3000 operates by receiving power from the battery module 1000 according to one embodiment of the present invention and/or the battery pack 2000 including the battery module 1000.

However, the present invention is not limited thereto, and the case may be configured in various shapes such as a circular shape or a pouch shape. In addition, the case may be made of a metal such as aluminum, an aluminum alloy, nickel-plated steel, or a laminated film or plastic that constitutes a pouch.

Although the present invention has been described above with limited embodiments and drawings, the present invention is not limited thereto, and it is obvious that various modifications and variations are possible within the scope of the technical idea of the present invention and the equivalent scope of the claims to be described below by those skilled in the art to which the present invention pertains.

### [Industrial Applicability]

One embodiment of the present invention has industrial applicability.

## Claims

1. A heat-absorbing sheet comprising:
a first heat-absorbing material layer in a powder form;
a second heat-absorbing material layer in a powder form and capable of reacting with the first heat-absorbing material layer to carry out a heat-absorbing reaction; and
a polymer layer located between the first heat-absorbing material layer and the second heat-absorbing material layer and isolating the first heat-absorbing material layer and the second heat-absorbing material layer.

2. The heat-absorbing sheet of claim 1, wherein the first heat-absorbing material layer includes one or more selected from the group consisting of ammonium chloride and ammonium nitrate.

3. The heat-absorbing sheet of claim 1, wherein the second heat-absorbing material layer includes barium hydroxide.

4. The heat-absorbing sheet of claim 1, wherein the polymer layer has a melting point of 90 to 120 °C.

5. The heat-absorbing sheet of claim 1, wherein the polymer layer includes one or more selected from the group consisting of low-density polyethylene (LDPE), linear low-density polyethylene (LLDPE), acrylonitrile butadiene styrene (ABS), polymethyl methacrylate (PMMA), polyacetal, polyphenylene ether, polystyrene, and polyvinyl chloride (PVC).

6. The heat-absorbing sheet of claim 1, wherein the heat-absorbing sheet includes the first heat-absorbing material layer and the second heat-absorbing material layer at a molar ratio of 2:0.8 to 1.2.

7. The heat-absorbing sheet of claim 1, comprising: a first case covering a side of the first heat-absorbing material layer, and a second case covering a side of the second heat-absorbing material layer,
wherein the first case and the second case have a melting point higher than that of the polymer layer.

8. The heat-absorbing sheet of claim 7, wherein the first case and the second case are joined with the polymer layer by thermal fusion.

9. The heat-absorbing sheet of claim 7, wherein an adhesive layer is formed on at least one surface of at least one of the first case and the second case.

10. A battery cell comprising:
an electrode assembly formed by laminating a positive electrode, a negative electrode, and a separator located between the positive electrode and the negative electrode;
a can in which the electrode assembly is embedded together with an electrolyte; and
a heat-absorbing sheet adhered to at least a part of the inside of the can,
wherein the heat-absorbing sheet includes: a first heat-absorbing material layer in a powder form; a second heat-absorbing material layer in a powder form and capable of reacting with the first heat-absorbing material layer to carry out a heat-absorbing reaction; and a polymer layer located between the first heat-absorbing material layer and the second heat-absorbing material layer and isolating the first heat-absorbing material layer and the second heat-absorbing material layer.

11. The battery cell of claim 10, wherein the heat-absorbing sheet is located on at least one of an upper surface, a side surface, and a lower surface inside the can.

12. The battery cell of claim 10, wherein the first heat-absorbing material layer includes one or more selected from the group consisting of ammonium chloride and ammonium nitrate.

13. The battery cell of claim 10, wherein the second heat-absorbing material layer includes barium hydroxide.

14. The battery cell of claim 10, wherein the polymer layer has a melting point of 90 to 120 °C.

15. The battery cell of claim 10, wherein the polymer layer includes one or more selected from the group consisting of LDPE, LLDPE, ABS, PMMA, polyacetal, polyphenylene ether, polystyrene, and PVC.

16. The battery cell of claim 10, wherein the heat-absorbing sheet includes the first heat-absorbing material layer and the second heat-absorbing material layer at a molar ratio of 2:0.8 to 1.2.

17. The battery cell of claim 10, wherein the heat-absorbing sheet includes a first case covering a side of the first heat-absorbing material layer and a second case covering a side of the second heat-absorbing material layer, and the first case and the second case have a melting point higher than that of the polymer layer.

18. The battery cell of claim 17, wherein the first case and the second case are joined with the polymer layer by thermal fusion.

19. The battery cell of claim 17, wherein the heat-absorbing sheet includes an adhesive layer formed on at least one surface of at least one of the first case and the second case and is adhered to at least a part of the inside of the can through the adhesive layer.

20. A battery module comprising:
the battery cell according to any one of claims 10 to 19; and
a housing in which the battery cell is accommodated in a plural number.
